# EUROPÄISCHE PATENTSCHRIFT

(11) **EP 1 268 319 B1**
(45) Veröffentlichungstag und Bekanntmachung des Hinweises auf die Patenterteilung: **17.12.2003**
(21) Anmeldenummer: 01943210.3
(22) Anmeldetag: 30.03.2001
(51) Int. Cl.: B65G 1/00

(54) **FÖRDERVORRICHTUNG MIT PACKUNGSTRÄGER**
CONVEYING DEVICE COMPRISING A PACKAGES CARRIER
DISPOSITIF CONVOYEUR EQUIPE DE SUPPORTS DE PACKS

(30) Priorität: 04.04.2000 DE 10016631
(43) Veröffentlichungstag der Anmeldung: 02.01.2003
(73) Patentinhaber: Tetra Laval Holdings & Finance S.A., 1009 Pully (CH)
(72) Erfinder: LUDWIG, Werner, 64291 Darmstadt-Wixhausen (DE); STANNEK, Josef, 64391 Pfungstadt (DE); Waldstädt, Manfred, 55127 Mainz (DE)
(74) Vertreter: Weber, Dieter, Dr.
(86) Internationale Anmeldenummer: EP0103673
(87) Internationale Veröffentlichungsnummer: WO01074691

(56) Entgegenhaltungen:
- WO-A-98/30491
- DE-A- 19 702 770
- DE-U- 8 702 853

## Beschreibung

Die Erfindung betrifft eine Vorrichtung zum intermittierenden Fördern von Packungen, die in einer ersten Laufrichtung in Packungsträgern auf einer ersten Prozeßebene in Positionen unterhalb von verschiedenen Bearbeitungsstationen und auf einer zweiten Rücklaufebene in einer zweiten, zu der ersten Laufrichtung parallelen Laufrichtung unter Bildung eines Förderkreislaufes zurück gefördert werden.

Für die Herstellung und insbesondere Fertigstellung von Packungen werden diese bei bekannten Maschinen in Werkstückträgern gehaltert und mittels endlos umlaufenden Förderbändern intermittierend einzelnen Bearbeitungsstationen zugeführt, in welchen die jeweilige Packung zum Beispiel nach dem fertigen Auffalten gefüllt und schließlich verschlossen wird. Die Förderbänder laufen um zwei Umlenkrollen um, wobei die Werkstückträger in deren Förderbogen von einer vertikalen Ausrichtung in eine horizontale und dann wieder in eine vertikale Ausrichtung gedreht werden. Die vertikale Ausrichtung ist die für die Prozeßebene, weil derartige Förderer häufig beim Verpacken flüssiger Lebensmittel eingesetzt werden, die von oben in die darunter stehende oben offene Packung eingefüllt werden. Bei vielen Förderem sind die Werkstückträger starr miteinander verkettet, zum Beispiel über Rollen- oder Gliederketten. Mit Nachteil ergeben sich nach längerem Betrieb unerwünschte Längungen der Ketten mit der Folge einer entsprechend ungenauen Positionierung unter der jeweiligen Bearbeitungsstation. Will man solche Förderer in der Lebensmittelbranche einsetzen, ist häufig das sterile Verpacken erforderlich, und bei Rollen- oder Gliederketten müssen bewegliche Teile geschmiert werden, so daß solche Förderer nicht im Reinraum arbeiten können, wo aber die Befüllung der Packungen erfolgt.

Zwar ist man schon auf die Verwendung von Zahnriemen übergegangen, um eine geringere Längung zu haben und die Schmierung zu vermeiden. Ein Abtrennen der Packungsträger, zum Beispiel zur besseren Sterilisation, und ein nachfolgendes Wiedermontieren sind jedoch praktisch nicht möglich. Außerdem besteht bei Zahnriemen häufig eine begrenzte Resistenz gegen thermische und chemische Einflüsse der Umgebung.

Um die Maschinenleistung von Packungsmaschinen und dort insbesondere von Füllern zu erhöhen, d.h. pro Zeiteinheit in einer Maschine eine größere Anzahl von Packungen verarbeiten zu können, hat man längs der Prozeßebene mehrere Packungsträger nebeneinander angeordnet, die also quer zu der ersten Laufrichtung nebeneinander angeordnet werden. Sofern die Endlosförderer der bekannten Art für ein Vervielfachen in der Breite überhaupt einsatzfähig sind, ist die Breite einer solchen Prozeßebene aber zumindest aus statischen Gründen Grenzen unterworfen, die eine weitere Leistungssteigerung nicht erlauben.

Aufgabe der Erfindung ist es daher, eine Fördervorrichtung für Packungen der eingangs näher bezeichneten Art zu schaffen, die bei kompaktem Aufbau eine hohe Leistung und den Betrieb mit einfachen Einrichtungen ermöglicht.

Erfindungsgemäß gelingt die Lösung dieser Aufgabe dadurch, daß die jeweils übereinanderliegenden Enden des im wesentlich horizontal verlaufenden ersten Förderers in der ersten Prozeßebene und des im wesentlichen horizontal verlaufenden dritten Förderers in der zweiten Rücklaufebene zur Bildung des Förderkreislaufes durch im wesentlichen vertikal arbeitende zweite und vierte Hebeförderer miteinander verbunden sind, daß jeder Förderer einen separaten Antrieb hat, daß zwischen der ersten Prozeßebene und der zweiten Rücklaufebene eine dritte Ladeebene angeordnet ist, die drei Ebenen im wesentlichen horizontal angeordnet sind, jeder Packungsträger einen im wesentlichen ebenen Aufbau hat, der über den Förderkreislauf in einer im wesentlichen horizontalen Stellung gehalten wird und daß im Bereich der dritten Ladeebene Mittel zum Be- und Entladen der Pakkungen in die und/oder aus den Packungsträgern in einer Laderichtung vorgesehen sind, die zu der ersten Laufrichtung der Packungen parallel ist.

Zunächst kann man die erfindungsgemäße Fördervorrichtung mit Hilfe eines einfachen Förderbildes erläutern, welches einen rechteckigen Förderweg zeigt mit einer ersten Laufrichtung oben auf einer ersten Prozeßebene, welcher sich am Ende dieser Ebene ein Hebeförderer anschließt, um die Pakkungsträger aus der ersten Prozeßebene nach unten in die zweite Rücklaufebene zu fördern; daran der sich im wesentlichen horizontal verlaufende dritte Förderer in der zweiten Rücklaufebene anschließt, wobei hier die Laufrichtung der der ersten Prozeßebene parallel aber entgegengesetzt gerichtet ist. und daß der Förderkreislauf durch einen sogenannten vierten Hebeförderer geschlossen wird, welcher die Packungsträger von der unteren zweiten Rücklaufebene in die obere erste Prozeßebene anhebt. Stellt man sich diesen rechteckigen Lauf in Uhrzeigerrichtung vor, dann werden die Packungsträger in der ersten Prozeßebene von links nach rechts durch den ersten Förderer bewegt, am Ende vertikal von dem zweiten Hebeförderer nach unten in die zweite Rücklaufebene abgesenkt, dort durch den dritten Förderer horizontal nach links bewegt, so daß der vierte Hebeförderer die Packungsträger dann vertikal wieder in die Anfangsposition nach oben in die erste Prozeßebene anheben kann. Durch den jeweils separaten Antrieb für jeden der Förderer sind unterschiedliche Laufmuster einstellbar. Überdies kann man sehr einfache Antriebe wählen und je nach Steuerung mit unterschiedlichen Geschwindigkeiten derart laufen lassen, daß in dem ganzen Förderkreislauf zum Beispiel nur auf einer der horizontalen Ebenen eine Vielzahl von Packungsträgern vorhanden ist, während in den anderen drei Förderern nur wenige bis keine Packungsträger bewegt werden. Dadurch kann man Packungsträger einsparen, den Betrieb vereinfachen, zum Beispiel hervorragende Reinigungsmöglichkeiten vorsehen, und dennoch eine hohe Leistung vorgeben. Die am langsamsten arbeitende Station gibt den Zeittakt für das intermittierende Fördern der Packungsträger vor.

Der vorteilhaft kompakte Aufbau der Fördervorrichtung erfährt keinerlei Einschränkung, wenn die erwähnte dritte Ladeebene zwischen der ersten Prozeßebene und der zweiten Rücklaufebene vorgesehen ist. Durch die Anordnung dieser Ladeebene kann aber die Leistung der Fördervorrichtung erheblich dadurch gesteigert werden, daß das Be- und Entladen in überraschend großem Maße beschleunigt werden kann, was bei den bisherigen Förderern mit dem Zuführen am Eingang der Prozeßebene vertikal von oben nach unten nicht möglich war. Der gesamte Aufbau vereinfacht sich dadurch, daß die drei beschriebenen Ebenen im wesentlichen horizontal angeordnet sind. Die Länge des Förderers wird bei einer bevorzugten Ausführungsform durch die verschiedenen, hintereinander geschalteten Bearbeitungsstationen bzw. die dafür erforderliche Gesamtlänge bestimmt. Die Höhe der kompakt aufgebauten Fördervorrichtung wird niedrig gehalten und der Betrieb beschleunigt und vereinfacht, weil jeder im wesentlichen ebene Packungsträger immer horizontal gehalten wird, auch in den vertikal arbeitenden zweiten und vierten Hebeförderern. Die Be- und Entlademittel können dann nämlich mit großer Beschleunigung auf kurzen Wegen fertige Packungen von den Packungsträgern abziehen und leere Packungen an der Beladeposition in die Packungsträger einschieben, wobei dies für eine Vielzahl von Packungen gleichzeitig erfolgen kann, sofern die Pakkungsträger mehrere Packungen aufnehmen.

Die vorstehenden Maßnahmen zeigen, wie ein sehr leistungsstarker Förderer dennoch einen sehr kompakten Aufbau haben kann und den Einsatz von einfachen Einrichtungen für den Betrieb erlaubt, zum Beispiel für das Beladen, für die Veränderung der Laufrichtung, obwohl oder gerade weil keine bogenförmig geführte Strecke und auch nicht ein bogenförmig geführter Strang von Förderkörpern bewegt werden muß.

Bei weiterer vorteilhafter Ausgestaltung der Erfindung ist die gesamte Förderzeit des Hebeförderers im wesentlichen gleich der Taktzeit des ersten Förderers in der ersten Prozeßebene, und die Zeit zum Be- bzw. Entladen ist etwa gleich der Transportzeit innerhalb der Taktzeit des ersten Förderers. Die intermittierende Bewegung des ersten Förderers erfolgt in Takten mit jeweils einer bestimmten Taktzeit. Die Dauer dieser Taktzeit ist gleich die Summe der Transportzeit plus der Haltezeit. Dies bedeutet mit anderen Worten, daß ein Packungsträger in einem Takt einerseits zu einer bestimmten Bearbeitungsstation transportiert wird (Transportzeit) und andererseits zusätzlich danach so lange angehalten wird, bis die Bearbeitung vollendet ist (Haltezeit). Nach Ablauf dieser beiden Zeitintervalle ist die Taktzeit abgelaufen. Der erste Förderer in der ersten Prozeßebene hat verhältnismäßig kurze Transportzeiten im Verhältnis zu den Haltezeiten. Der Packungsträger kann also in kürzerer Zeit zu der neuen Bearbeitungsstation transportiert werden als Zeit benötigt wird, um die Bearbeitung zu vollenden. Wenn bei einer bevorzugten Ausführungsform die Taktzeit sechs Sekunden beträgt, dann kann man die Haltezeit auf fünf Sekunden und die Transportzeit auf eine Sekunde einstellen. Entsprechend umgekehrt sind die Verhältnisse erfindungsgemäß bei dem Hebeförderer. Die Zeit, die notwendig ist, um den gesamten Transport des Hebeförderers durchzuführen, also die Zeit für die Bewegung und für das Laden (Be- oder Entladen) ist etwa so lang wie die Taktzeit des ersten Förderers. Von dieser gesamten Taktzeit stellt die Zeit zum Be- und Entladen des Hebeförderers nur einen Bruchteil dar. Die Zeit zum Be- und Entladen des Hebeförderers ist etwa gleich oder kleiner der Transportzeit des ersten Förderers; bei dem vorgenannten Beispiel braucht man also nur etwa eine Sekunde zum Beladen oder Entladen. Diese überraschend kurze Zeit ist nur möglich, weil es für das Be- und Entladen die separate dritte Ladeebene gibt, die ebenso horizontal ist wie die anderen beiden Ebenen (Prozeßebene, Rücklaufebene). Hinzu kommt, daß die Be- und Entlademittel eine Arbeitsrichtung haben, die parallel zu der ersten Laufrichtung der Packungen ist. Arbeitet der Hebeförderer vertikal, dann erfolgt das Be- und Entladen in horizontaler Richtung. Beim Beladen brauchen zum Beispiel Schieber die bearbeiteten Packungen nur aus den Packungsträgem herausziehen, wozu ein kurzes Zeitintervall ausreicht. Eine konkrete Ausführungsform einer bevorzugten Maschine mit einer besonderen Fördervorrichtung gemäß der Erfindung erlaubte das Be- und Entladen von 1-Liter-Packungen in 0,8 Sekunden, bei einem anderen Typ von Maschine 0,5 Sekunden. Keine bisher bekannte Maschine erlaubte ein Be- oder Entladen eines Förderers in derart kurzer Zeit.

Zweckmäßig ist es gemäß der Erfindung ferner, wenn der Packungsträger auf zwei diametral gegenüberliegenden Seiten U-förmige, nach außen offene Ausnehmungen aufweist, die in der ersten Laufrichtung des ersten Förderers ausgerichtet sind. Man kann sich in der Mitte eines U eine vertikale Achse vorstellen. Wenn man unter diesem U im Abstand ein umgekehrtes weiteres U ausgerichtet so anordnet, daß beide Mittelachsen auf eine Linie fallen, dann hat man die vorstehend beschriebene Ausrichtung der zwei Ausnehmungen vorliegen. Außerdem gibt die Erfindung hiernach die Lehre, daß diese Mittellinie der beiden entgegengesetzt aneinander angeordneten U-förmigen Ausnehmungen parallel zu der ersten Laufrichtung ist. Die Ausrichtung dieser Ausnehmungen wirkt sich besonders günstig in der dritten Ladeebene bei Be- und Entladen aus. Beim Entladen wird die eine Packung aus der nach außen in Förderrichtung offenen Ausnehmung herausgeschoben oder - gezogen, wobei diese Bewegungsrichtung zum Beispiel gleich der der ersten Laufrichtung ist. Die andere gegenüberliegende Packung wird dann in die entgegengesetzte Richtung herausbewegt. Beides geschieht gleichzeitig und benötigt nur wenig Zeit. Der andere Vorteil der zwei Ausnehmungen besteht darin, daß der Packungsträger auf diese Weise die doppelte Kapazität bekommt. Der Fachmann weiß, daß die Breite einer Maschine und auch einer Fördervorrichtung nicht beliebig gesteigert werden kann, weil Festigkeitsbedingungen eine Grenze für die Verbreiterung eines Pakkungsträgers vorgeben. Durch die Anordnung von zwei Ausnehmungen, die zueinander ausgerichtet sind, kann man auf dieser Bahn zwei Packungen anstelle einer haltern, transportieren und ein- sowie ausladen.

Günstig ist es gemäß der Erfindung weiterhin, wenn der Packungsträger die Gestalt einer länglichen, sich quer zu der ersten Laufrichtung erstreckenden Leiste derart hat, daß die Ausnehmungen paarweise nebeneinander zu liegen kommen. Außer der vorgenannten Verdoppelung der Kapazität eines Packungsträgers von einer auf zwei Packungen ist die Kapazitätserweiterung in Querrichtung in gewissem Maße möglich, wie die Festigkeitsbedingungen dies zulassen. Hierfür kann man den Packungsträger in Leisten- oder Stabform ausgestalten und die Ausnehmungen paarweise nebeneinander anordnen. Die Be- und Entladeeinrichtungen, die in der dritten Ladeebene arbeiten, können dann alle nebeneinander angeordneten Packungen in einer Leiste auf einmal heraus- oder hineinbewegen. Die Kapazität einer solchen Fördervorrichtung ist dadurch erheblich vergrößert.

Vorteilhaft ist es gemäß der Erfindung auch, wenn der Packungsträger für die Halterung von Flaschen ein leistenförmiges Blech mit quer zu der ersten Laufrichtung nebeneinander angeordneten Paaren von einander abgewandten U-förmigen Ausnehmungen ist, deren Breite dem Außendurchmesser des Flaschenhalses entspricht. Ein günstiges Anwendungsgebiet der Fördervorrichtung gemäß dieser Erfindung ist die Aufnahme, Halterung und Transport von vorzugsweise aus Kunststoff gefertigten, oben offenen Flaschen. Die Breite der jeweils U-förmigen Ausnehmung entspricht dann etwa dem Außendurchmesser des betreffenden Flaschenhalses. Es versteht sich, daß man eine Flasche dann nur von außen in den Grund des U hinein zu schieben braucht, um dort eine gute Halterung für die Flasche vorzusehen. Das Entladen ist umgekehrt ebenso günstig. Die Herstellung eines solchen Packungsträgers ist preiswert und technisch überraschend einfach. Ein entsprechend ausgestattetes Blech oder ein Leiste mit Doppelwandungen und Versteifungsschienen ist einfach herstellbar und benötigt außer der Reinigung keinerlei Wartung. Ein solcher Packungsträger kann in die oben beschriebenen Einrichtungen eingesetzt und über die verschiedenen Förderwege transportiert werden. An den schmalen Enden eines bevorzugten leistenförmigen Bleches können Träger, Stützen und an diesen angebrachte Schienen vorgesehen sein, so daß die Packungsträger längs der ersten Prozeßebene und auch längs der zweiten Rücklaufebene mit einfachen Mitteln abgestützt und vorzugsweise gleitend auf Tragschienen verschoben werden.

Dabei ist es erfindungsgemäß von besonderem Vorteil, wenn die Antriebseinrichtung des ersten Förderers in der ersten Prozeßebene mindestens eine sich in der ersten Laufrichtung erstreckende Schubstange aufweist, die schwenkbar und in der ersten Laufrichtung und entgegen dieser vor- und zurückverschiebbar ist und auf der im Abstand voneinander Vorschubnocken befestigt sind, die mit Verriegelungsnuten am Packungsträger in Eingriff bringbar sind. Gerade in der ersten Prozeßebene, in welcher die Packungen in hygienischer Weise behandelt und transportiert werden müssen, weil es unter anderem um ein Befüllen der Packung geht, sollten einfache und robuste Bewegungsmittel ein zuverlässiges Vorschieben gewährleisten. Die wenigstens eine Schubstange ist ein solches Fördermittel. Im Abstand voneinander sind Vorschubnocken an dieser Schubstange befestigt, die beispielsweise alle in eine erste Richtung radial von der Schubstange wegstehen. Schwenkt man die Schubstange um ihre eigene Achse, dann kann man diese Vorschubnocken aus einer Ruheposition in eine solche Stellung schwenken, in welcher die Vorschubnocken in gerade passend gegenüberliegend angeordnete Verriegelungsnuten am Packungsträger eingreifen. Wird dann die Schubstange in Richtung ihrer Längsrichtung ein Stück weit bewegt, dann wird der Packungsträger um denselben Weg ebenfalls bewegt. Schwenkt man danach die Schubstange wiederum um einen Winkel, der zum Beispiel 90° oder 180° betragen kann, dann geben die Verriegelungsnuten die Packungsträger frei. Die Schubstange kann zurück zu den nächsten Packungsträgern gelangen, mit diesen in Eingriff treten und diese dann ebenso nachschieben. Sind mehrere Vorschubnocken an der Schubstange befestigt, dann können mehrere Packungsträger gleichzeitig bewegt werden. Bei breiteren Fördervorrichtungen ist es erfindungsgemäß zweckmäßig, auf jeder Seite, d.h. an den beiden gegenüberliegenden Enden (Breitseiten) des Packungsträgers, je eine Schubstange, insgesamt in der Vorrichtung also zwei Schubstangen vorzusehen. Günstig ist es, wenn ein einziger Motor einen synchronen Antrieb auf beide Schubstangen gibt. Es kann ein Motor zum Beispiel die Längsverschiebung besorgen und der andere das Schwenken.

Bei Hochleistungsmaschinen enthält jede Bearbeitungsstation eine Doppelreihe von quer nebeneinander angeordneten Bearbeitungseinrichtungen. Wird dann zum Beispiel in einer Station ein Spülvorgang des Packungsinneren vorgenommen, dann erfolgt das Spülen gleichzeitig für zwei (oder ein Vielfaches von zwei) Packungen. Wird in der nächsten Bearbeitungsstation das Spülgut durch Trocknen entfernt, dann sorgen jeweils zwei Trocknungseinrichtungen für das Austrocknen des Inneren der Packungen gleichzeitig in der nächsten Bearbeitungsstation. Diese zeitsparende Ausgestaltung der gesamten Förder- und Füllmaschine bedingt in jeder Bearbeitungsstation die doppelte Anzahl von Werkzeugen. Im Falle von Düsen oder dergleichen handelt es sich hier nicht um große Kosten. Wenn aber an das Versiegeln und Verschließen einer Packung gedacht ist, sind die Einrichtungen doch recht aufwendig, wenn eine präzise und zudem möglicherweise noch sterile Versiegelung erfolgen muß. Es wäre dann zweckmäßig und möglich nur eine Reihe von Siegelstationen vorzusehen, wenn man den Packungsträger zuerst mit den jeweils vorderen Packungen in den vorderen Ausnehmungen unter die Siegelstationen fährt und danach die jeweils nächsten Packungen in den hinteren Ausnehmungen desselben Packungsträgers unter die gleichen Siegelstationen fährt. Das bedeutet aber, daß die Fördereinrichtung in der Lage sein muß, den Packungsträger nur um einen halben Taktweg zu fördern. Von der Zeit her ist dies möglich, d.h. die Bearbeitung in halber Taktzeit ist möglich, denn das Siegeln erfolgt weit schneller als das Befüllen der Packung mit einer Flüssigkeit.

Eine besonders bevorzugte Ausführungsform ist daher erfindungsgemäß dadurch gekennzeichnet, daß zwischen zwei Vorschubnocken, die in gleicher Richtung von der Schubstange radial abstehen, ein Zwischenhubnocken in einer anderen Richtung radial abstehend auf der Schubstange derart befestigt ist, daß jeder Packungsträger in halber Taktzeit um den halben Taktweg unter einer bestimmten Bearbeitungsstation vorbewegbar ist.

Durch den vorteilhaften Aufbau des jeweiligen Packungsträgers und seine Abstützung seitlich auf Tragschienen, auf denen er gleitend verschoben wird, ist ein Entkoppeln der einzelnen Packungsträger voneinander möglich. Die beschriebenen einfachen Fördermittel mit den Vorschubnocken sind in der Lage, die Packungsträger um jeweils einen ganzen Taktweg vorzubewegen. Wenn jetzt entsprechend der zuletzt beschriebenen Maßnahme zwischen zwei Vorschubnocken unter einem anderen Winkel ein Zwischenhubnocken radial von der Schubstange absteht, dann sind andere Taktwege mit anderen Taktzeiten für denselben Packungsträger möglich. Man kann in ein und derselben Prozeßebene die Packungsträger also über sieben (oder weniger) von acht Bearbeitungsstationen um jeweils einen ganzen Taktweg fördern und in einer (oder mehr) Stationen(en) den Pakkungsträger zweimal um den halben Taktweg fördern, so daß zuerst die vordere Reihe der offenen und gefüllten Packungen unter die Reihe der Siegelwerkzeuge gelangt und im nächsten Schritt noch innerhalb der vollen Taktzeit (zum Befüllen) die nächste hintere Reihe unter die Siegelwerkzeuge gelangt, damit in der vollen Taktzeit beide Reihen von Packungen nacheinander mit versiegelten Verschlüssen versehen werden können.

Ein weiterer Vorteil der U-förmigen Ausnehmungen im Packungsträger mit den auf die Flaschenhälse abgestimmten Breiten liegt darin, daß Flaschenkörper unterschiedlichen Formats von ein und demselben Packungsträger aufgenommen und transportiert werden können, sofern nur die Außenmaße des Flaschenhalses gleich sind. Bei vielen Flaschen unterschiedlichen Formats sind die Halsmaße normiert und haben eine feste Struktur.

Die Packungsträger gemäß der Erfindung sind im Gegensatz zum Stand der Technik nicht starr miteinander verkettet, so daß man sie flexibel staffeln kann. Man kann fast alle Packungsträger zum Beispiel in die erste Prozeßebene fahren und die Einrichtung an den anderen Teilförderem reinigen oder nahezu alle Packungsträger in die zweite Rücklaufebene fahren, um die einzelnen Bearbeitungsstationen von allen Seiten her zu reinigen. Teilabschnitte des Gesamtförderers gemäß der Erfindung können also leergefahren werden. Durch die praktische und einfache Halterung der Pakkungsträger auf den Tragschienen ist es möglich, diese in kürzester Zeit und mit einfachsten Werkzeugen auszutauschen. Dies kann zum Beispiel bei Flaschen- oder Formatwechsel unter Umständen notwendig werden.

Die beidseitige Beladung der Packungsträger, bei einer bevorzugten Ausführungsform von vorne und von hinten erlaubt das beidseitige, kurzzeitige und platzsparende Laden und Transportieren der Packungen.

Weitere Vorteile, Merkmale und Anwendungsmöglichkeiten der vorliegenden Erfindung werden deutlich anhand der folgenden Beschreibung bevorzugter Ausführungsformen in Verbindung mit den anliegenden Zeichnungen. Es zeigen:
- Figur 1: eine Schemazeichnung des gesamten Förderkreislaufes unter Darstellung der drei Ebenen und der vier Förderer,
- Figur 2: ebenfalls schematisch einen Teil der Antriebseinrichtung des ersten Förderers in drei verschiedenen Betriebszuständen,
- Figur 3: eine isometrische Gesamtansicht der Fördervorrichtung,
- Figur 4: eine isometrische Schrägdraufsicht auf den Packungsträger mit eingesetzten Kunststoffflaschen als Packungen,
- Figur 5: eine abgebrochene Teilansicht auf das linke vordere untere Ende des Packungsträgers der Figur 4 in einer Ansicht von unten nach oben,
- Figur 6: abgebrochen und vergrößert zwei hintereinander folgende Packungsträger, die teilweise mit Flaschen als Packungen bestückt sind, mit Darstellung der Schubstange mit Vorschubnocken als Antriebseinrichtung und

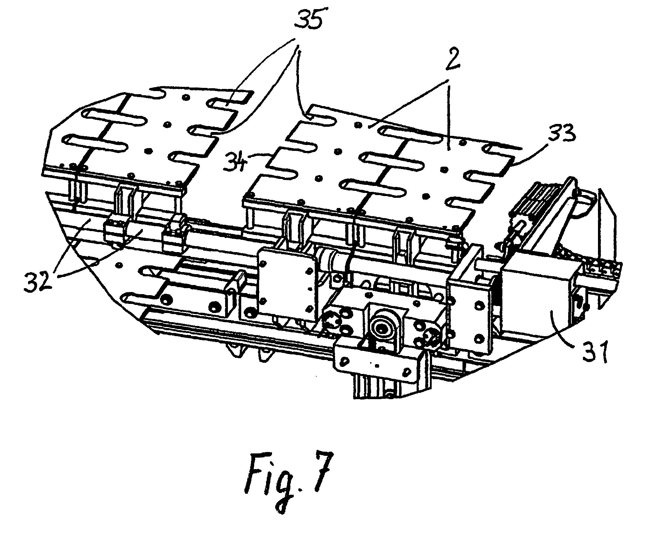

- Figur 7: eine abgebrochene Einzelansicht entsprechend dem rechten oberen Ende der Fördervorrichtung gemäß Figur 3, wo ein Packungsträger von der oberen ersten Prozeßebene an den zweiten vertikal arbeiteten Hebeförderer übergeben wird.

Bei den hier gezeigten Ausführungsformen handelt es sich bei den mit 1 bezeichneten Packungen um Kunststoffflaschen, wobei die flaschenförmigen Packungen 1 in der folgenden Beschreibung der bevorzugten Ausführungsformen mit "Flasche" bezeichnet werden. Die Flaschen sitzen in Packungsträgern 2. Unter einem Rahmen 3, welcher gleichzeitig auch die obere Begrenzung einer hier nicht näher dargestellten Hygienekammer bildet, sind diverse Bearbeitungsstationen 4, 5, 6 angebracht, von links nach rechts zum Beispiel Blasdüsen zum Vorheizen, danach Sprühdüsen im Falle eines Einsprühens eines sterilisierenden Gemisches, danach verschiedene Trocknungsstationen, eine Schneidestation, eine Füllstation 6 und die Siegelstation 5, mit deren Hilfe die gefüllten Flaschen verschlossen werden. Zum Beispiel kann dieses Verschließen bei einer bevorzugten Ausführungsform, welche flüssige Lebensmittel steril verpackt, durch Aufsiegeln einer mit Kunststoff beschichteten Aluminiumfolie erfolgen. Man erkennt, daß alle Bearbeitungsstationen 4 und 6 doppelt ausgebildet sind, d.h. es werden immer zwei Reihen von Flaschen gleichzeitig bearbeitet, in der Füllstation 6 zum Beispiel gefüllt, wohingegen die Siegelstation 5 mit den verhältnismäßig aufwendigen Siegelwerkzeugen nur einfach bzw. einreihig ausgestaltet ist.

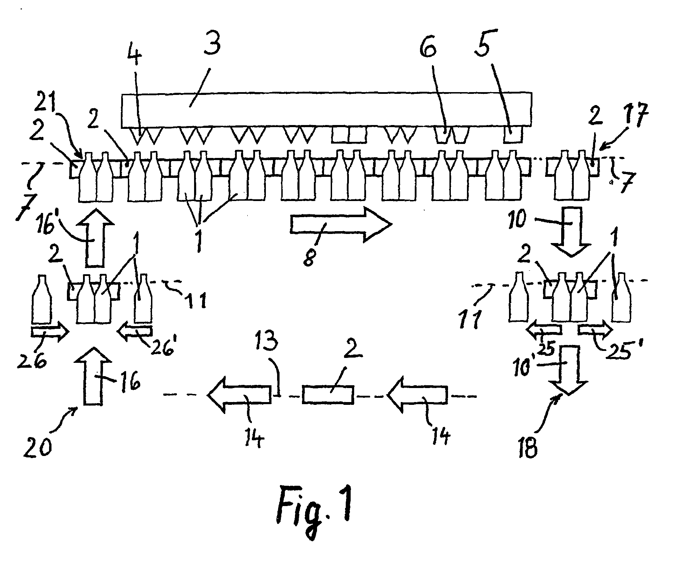

Die Reihe der Packungsträger 2 unter den Bearbeitungsstationen 4 bis 6 befindet sich in der ersten Prozeßebene 7, in welcher die Packungsträger 2 und damit die Flaschen 1 in der in Figur 1 durch den Pfeil 8 dargestellten ersten Laufrichtung bewegt werden, in Figur 1 also von links nach rechts.

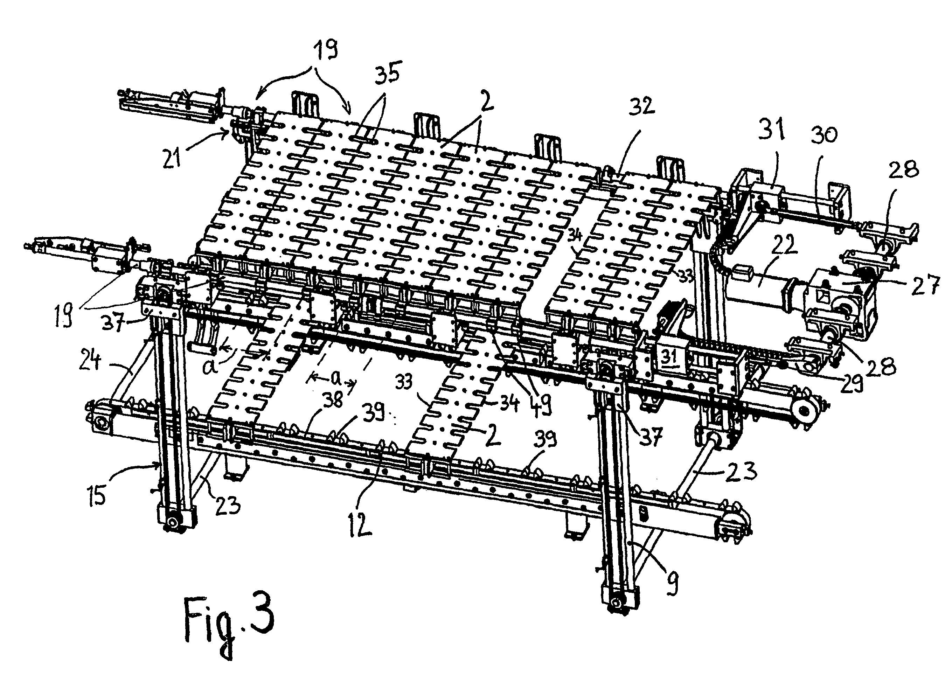

Haben die Flaschen 1 das rechte ablaufseitige Ende in der ersten Prozeßebene 7 erreicht, d.h. sind sie gefüllt und verschlossen, dann wird der betreffende Packungsträger auf den allgemein (Figur 3) mit 9 bezeichneten, vertikal arbeitenden zweiten Hebeförderer umgestellt. In diesem werden die Packungsträger 2 entsprechend den Pfeilen 10 und 10' (vertikale zweite Laufrichtung nach unten) abgesenkt, und zwar zunächst in der zweiten Laufrichtung 10 bis zu einer dritten Ladeebene 11 und danach in der zweiten Laufrichtung 10' auf die unterste Position, wo der Packungsträger 2 mit Hilfe des horizontal arbeitenden dritten Förderers 12 (Figur 3) in der zweiten Rücklaufebene 13 bewegt wird. Diese Bewegung ist durch die in Figur 1 unten nach links gerichteten Pfeile 14 gezeigt, welche eine dritte Laufrichtung vorgeben, die der ersten Laufrichtung entgegengerichtet aber parallel zu dieser verläuft. ist der Packungsträger 2 nach vollem Durchlauf in der zweiten Rücklaufebene 13 am Förderende links unten angekommen, wird er auf den vierten Hebeförderer 15 (Figur 3) umgestellt, der vertikal nach oben in Richtung der Pfeile16 und 16' arbeitet, welches die vierte Laufrichtung ist. Dieses vertikale Anheben des vierten Hebeförderers 15 erfolgt in zwei Stufen. Die erste Stufe ist durch den unteren Pfeil 16 dargestellt und reicht bis zu der dritten Ladeebene 11, wonach sich die zweite Hälfte der vierten Laufrichtung 16' anschließt, bis der Packungsträger 2 auf dem Niveau der ersten Prozeßebene 7 angelangt ist und dort umgesetzt wird, um die intermittierende Bewegung in der ersten Laufrichtung 8 zu beginnen.

Es gibt also gemäß den Figuren 1 und 3 einen von der Seite her gesehenen rechteckigen Förderkreislauf mit einer horizontalen ersten Laufrichtung 8, der sich am rechten, ablaufseitigen Ende die vertikale zweite Laufrichtung 10 und 10' anschließt, mit der dritten Laufrichtung 14 vom rechten unteren Ende bis zum linken unteren Ende und von dort in der vierten Laufrichtung 16, 16' nach oben wieder zurück auf die erste Prozeßebene 7.

Femer erkennt man in Figur 1 drei parallel zueinander verlaufende, gestrichelte Linien, welche die erste Prozeßebene 7, die zweite Rücklaufebene 13 und die dritte Ladeebene 11 darstellen. Über bzw. unter dem zweiten Hebeförderer 9 und auch über bzw. unter dem vierten Hebeförderer 15 befinden sich übereinanderliegende Enden 17 bzw. 18 sowie 20 bzw. 21. 17 ist dabei das oben liegende Ende zwischen dem horizontal arbeitenden und entlang der ersten Laufrichtung in der ersten Prozeßebene 7 arbeitenden ersten Förderer 19 und dem zweiten Hebeförderer 9. Das unten liegende Ende 18 ist das Ende des zweiten Hebeförderers 9 und der Anfang des dritten Förderers 12, der horizontal in der dritten Laufrichtung 14 arbeitet. Letzterer endet in dem unten liegenden Ende 20 des vierten Hebeförderers 15. Der vertikal und nach oben arbeitende vierte Hebeförderer 15 schafft den Packungsträger 2 letztlich wieder auf die erste Prozeßebene 7, und zwar an dem oben liegenden Ende 21 des vierten Hebeförderers.

Entsprechend den Laufrichtungen gibt es auch die vier separat voneinander angetriebenen Förderer, nämlich den ersten, horizontal verlaufenden Förderer 19, den zweiten, vertikal verlaufenden Hebeförderer 9, den dritten, horizontal verlaufenden Förderer 12 und den vierten, ebenfalls vertikal arbeitenden Hebeförderer 15.

Der erste Förderer 19 hat das vordere Ende 21 und das hintere Ende 17. Das vordere Ende 21 liegt über dem unteren Ende 20 des vierten Hebeförderers 15, während das Ende 17 des ersten Förderers 19 über dem unten liegenden Ende 18 des zweiten Hebeförderers 15 liegt. Ersichtlich liegen die Enden 17 und 18 einerseits sowie 21 und 20 andererseits übereinander. Der erste Förderer 19 hat einen Motor 22 als separaten Antrieb, sowohl der Hebeförderer 9 als auch der Hebeförderer 15 haben jeweils einen separaten Motor, der in Figur 3 an dem jeweils hinteren Förderer angebracht und daher nicht zu sehen ist. Ihre Drehkraft wird über die Antriebswellen 23 weitergeleitet. Der horizontal arbeitende dritte Förderer 12 in der zweiten Rücklaufebene 13 wird auch über einen separaten Motor angetrieben, der in Figur 3 am linken unteren und hinteren Ende zu denken und daher nicht dargestellt ist. Seine Drehkraft wird über die Antriebswelle 24 auf die horizontalen Förderstränge 12 übertragen.

Nicht nur die dritte Ladeebene 11 verläuft parallel zu der ersten Prozeßebene 7, sondern auch die durch die Pfeile 25, 25' und 26, 26' dargestellte Laderichtungen. Die Mittel zum Be- und Entladen sind in den Zeichnungen nicht dargestellt. Man kann sich aber leicht an oszillierend hin- und herbeweglichen Stangen angebrachte Schieber vorstellen, mit welchen eine ganze Reihe von Flaschen gleichzeitig zum Entladen in den Richtungen 25 nach rechts und links und zum Beladen in Richtung 26 von rechts und von links in die Mitte bewegt wird.

Im Betrieb des Förderers verläuft die Bewegung der Packungsträger 2 etwa gemäß Darstellung der Figuren 1 und 3 derart, daß die meisten Packungsträger 2 sich in der ersten Prozeßebene 7 befinden und nur einer oder zwei Packungsträger sich zum Beispiel im Rücklauf befinden. Der Motor 22 (Figur 3) treibt über ein Getriebe 27 von der Mitte aus nach beiden Seiten hin jeweils eine Welle 28, so daß auf jeder Seite über eine Kurbelschwinge 29 und eine Pleuelstange 30 eine oszillierend hinund hergehende Bewegung eines Schlittens 31 erzeugt wird, um auf jeder Seite eine Schubstange 32 in die erste Laufrichtung 8 und umgekehrt in die entgegengesetzte Laufrichtung zu bewegen. Hierdurch wird die intermittierende Bewegung der einzelnen Packungsträger 2 um jeweils eine Taktlänge besorgt, insbesondere bei der Bewegung von einer Bearbeitungsstation 4 zur nächsten usw. bis zu der Füllstation 6. Von dort an erfolgt eine zweistufige Bewegung zu der Siegelstation 5 hin, wie noch unten beschrieben wird.

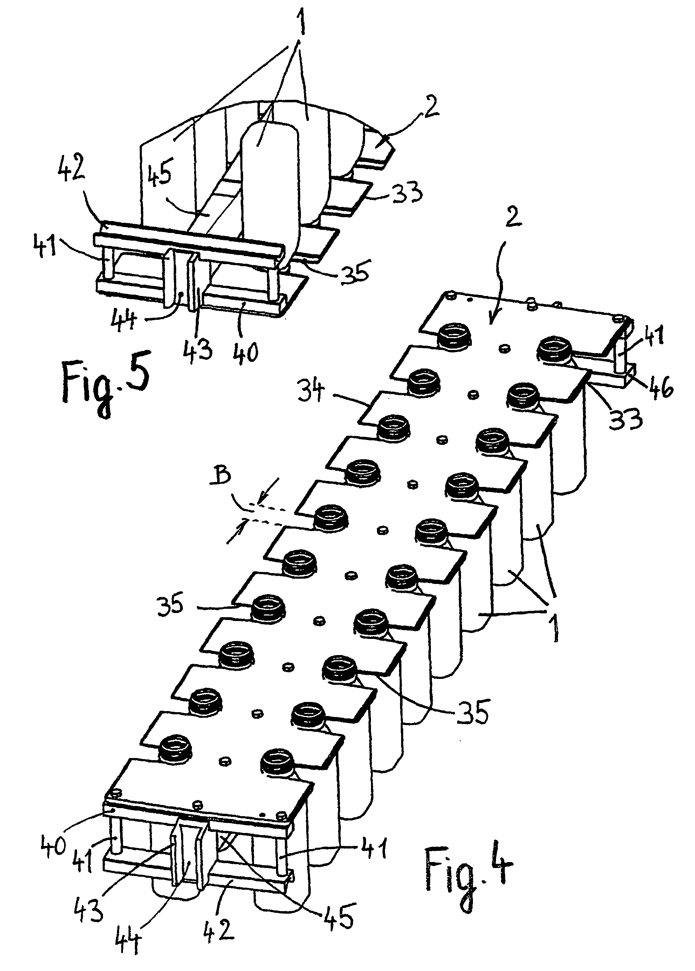

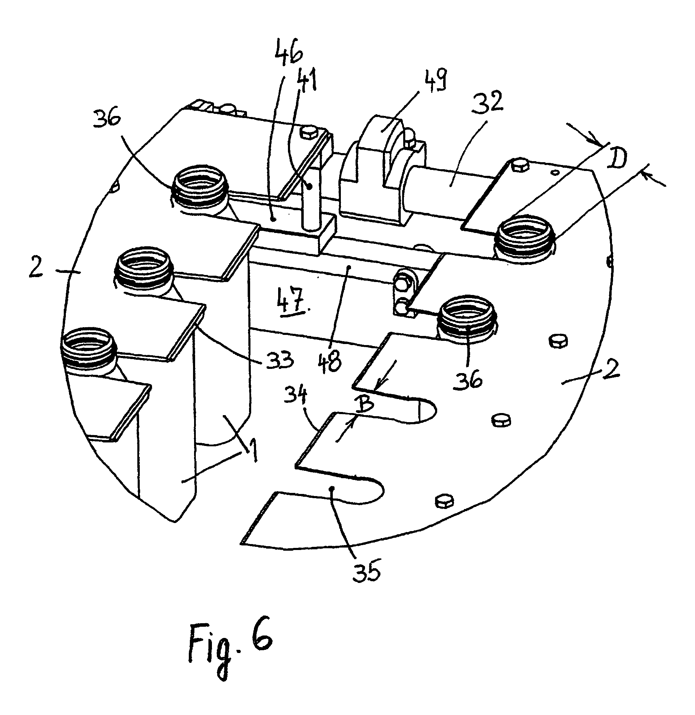

Jeder Packungsträger 2 hat bei der hier dargestellten bevorzugten Ausführungsform die Gestalt einer länglichen, sich quer zu der ersten Laufrichtung 8 erstreckenden Leiste und die Gestalt eines Bleches. Von der Vorderseite 33 des Packungsträgers 2 erstrecken sich U-förmige, nach außen zu dieser Seite 33 hin offene Ausnehmungen 35. Auch von der diametral gegenüberliegenden hinteren Seite 34 des Packungsträgers 2 erstreckt sich - allerdings umgekehrt zu den Ausnehmungen auf der Vorderseite 33 - eine Reihe von nach hinten offenen Ausnehmungen 35. Da es sich bei den Packungen 1 hier um Flaschen mit einem an deren Öffnung angeordneten Hals 36 handelt, ist die Breite B (Figur 4) auf den Außendurchmesser D (Figur 6) so abgestimmt, daß die Flasche mit ihrem Hals 36, der zum Beispiel Außengewinde hat, in die Ausnehmung 35 hereinfahren und dort gehalten werden kann. Diese Halterung ist unabhängig von der Ausgestaltung der Flasche im unteren Bereich, sei es daß sie lang, rund, eckig, kurz, groß oder klein ist. Der zweite Hebeförderer 9 und der vierte Hebeförderer 15 arbeiten mit vertikal angetriebenen Schlitten 37, die auf beiden Seiten mit den jeweiligen Packungsträgern 2 in Eingriff kommen und diese von der ersten Prozeßebene 7 absenken in die zweite Rücklaufebene 13 (Hebeförderer 9) oder umgekehrt (Hebeförderer 15). Der dritte, horizontal arbeitende Förderer 12 arbeitet mit einem Endlosriemen 38 mit aufgesetzten Taschen 39, in denen die Packungsträger 2 vertikal eingeschoben werden.

An beiden Querenden (Figuren 4 und 5) des Packungsträgers 2 ist dieser mit einem Träger 40 versehen, der über zwei Stützen 41 eine nach unten geöffnete, im Querschnitt V-förmige Gegenschiene 42 haltert. Zwischen dieser Gegenschiene 42 und dem Träger 40 ist in der Mitte ein Vorschubblock 43 angebracht, in den eine seitlich nach außen offene Verriegelungsnut 44 eingearbeitet ist. Der Vorschubblock 43 kann das seitliche Ende eines als Hohlprofil ausgestalteten Versteifungsträgers 45 sein. Dieser Versteifungsträger 45 verläuft in der Mitte quer über den gesamten leistenförmigen Packungsträger 2, damit dieser auch bei eingehängten gefüllten Flaschen sich nicht zu stark durchbiegt. Zweckmäßig ist es, wenn dasjenige Ende, welches in den Figuren 4 und 5 auf der gegenüberliegenden Seite des Packungsträgers 2 liegt, über Stützen 41 eine flache Auflageschiene 46 angebracht ist, um etwaige Toleranzen in Querrichtung (Längsrichtung der Leiste) durch seitliches Verschieben auf einer Tragschiene 47 zu ermöglichen. Diese Tragschiene ist übrigens oben mit einer Flachführung 48 aus Kunststoff versehen, damit die flache Auflageschiene 46 möglichst reibungsfrei gehaltert und geführt werden kann.

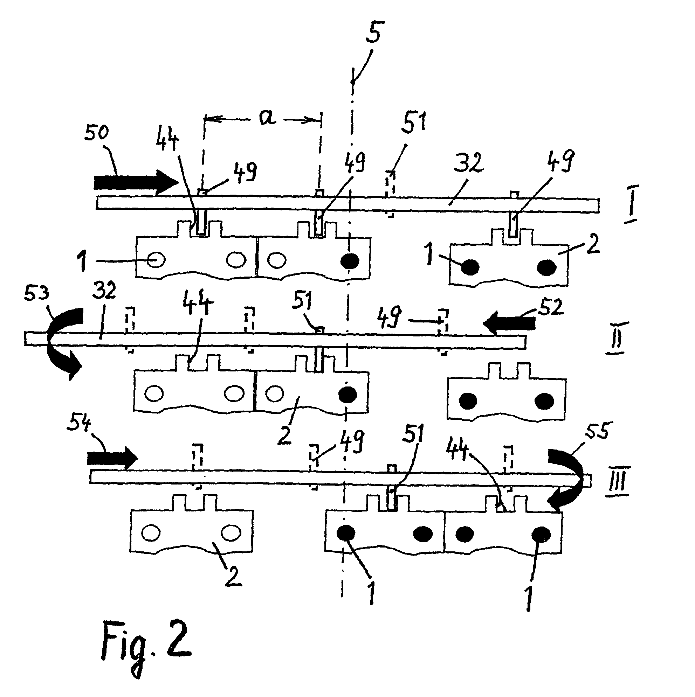

Auf jeder Schubstange 32 sind in Abständen a (Figuren 2 und 3) Vorschubnocken 49 in einem bestimmten Winkel von der Schubstange 32 radial abstehend angebracht. Dieser Abstand a ist gleich dem Mittenabstand zweier benachbart aneinander gefahrener Packungsträger 2, so daß der Abstand der zwei benachbarten Verriegelungsnuten 44 ebenfalls gleich a ist. Dadurch können die Vorschubnocken 49 bei einer bestimmten Drehung in diese Verriegelungsnuten 44 einfahren, wie zum Beispiel in dem Zustand I in Figur 2 gezeigt ist. Man kann sich vorstellen, daß der hochstehende Vorschubnocken 49 der Figur 6, welcher in Ruheposition steht, um 90° nach vom gedreht wird, wenn er einer Verriegelungsnut 44 eines Packungsträgers 2 gegenübersteht. Dann ist dieser beschriebene Eingriff erreicht.

In Figur 2 bedeutet der lange schwarze Pfeil in der Position I, der mit 50 bezeichnet ist und nach rechts in die erste Laufrichtung 8 zeigt, daß die Schubstange 32 aus einer nicht dargestellten linken Position einen Hub nach rechts in Richtung dieses Pfeiles 50 macht, so daß die linken zwei gezeigten Packungsträger 2 die gezeigte Position erreicht haben. Die von oben nach unten durch alle drei Positionen I, II und III der Schubstange durchgehende strichpunktierte Linie ist die Stellung, in welcher die Siegelstation 5 ortsfest unter dem Rahmen 3 sitzt. Jeder Packungsträger 2 ist auf seiner der Nut 44 gegenüberliegenden Seite in Figur 2 abgebrochen gezeigt. Es versteht sich, daß er die Form einer langen Leiste hat, wie anhand der Figur 4 beschrieben. Die Kreise bedeuten schematisch, daß auf jedem Packungsträger 2 zwei Reihen von Flaschenhälsen 36 getragen sind. Die drei am weitesten links gezeigten Kreise sind weiß, während der rechte Kreis unter Position der Siegelstation 5 steht und schwarz ist. Dies bedeutet in dieser Schemazeichnung, daß die vordersten Flaschen durch die Siegelung verschlossen sind. Entsprechend den weißen Kreisen sind die Flaschenhälse 36 dahinter noch offen. Der Abstand a entspricht der gesamten Taktstrecke. In Laufrichtung 8 ist hingegen der Abstand zweier Flaschenhälse 36 voneinander gleich der halben Taktstrecke. Da sich über die gesamte Maschine nur eine Reihe von Siegelstationen 5 zieht, muß der links von dem schwarzen Kreis stehende erste weiße Kreis bei einem Zwischenhub um nur die halbe Taktlänge nur bis zu der strichpunktierten Linie gefördert werden.

Zum einen gelingt dies nur durch die Entkopplung der Packungsträger 2 voneinander, wie man aus dieser Beschreibung erkennt. Zum anderen erreicht man diesen kürzeren Zwischenhub durch einen Zwischenhubnocken 51. Dieser ist zwischen zwei Vorschubnocken 49, die in gleicher Richtung von der Schubstange 32 radial abstehen, zum Beispiel diametral in die entgegengesetzte Richtung von der Schubstange 32 radial abstehend angebracht. Dreht man, ausgehend von der Grundstellung 1 in Figur 2, die Schubstange 32 um 90°, dann treten ersichtlich sowohl die Vorschubnocken 49 als auch der Zwischenhubnocken 51 außer Eingriff bzw. letzterer kommt trotz der Drehung um 90° noch nicht in Eingriff. In dieser Position kann die Schubstange 32 an den stillstehenden Packungsträgem 2 ohne Berührung vorbeigeschoben werden. Es wird angenommen, daß ein halber Hub entgegen der ersten Laufrichtung gemäß dem kurzen schwarzen Pfeil 52 in Position II erfolgt, und alle Nocken bewegen sich um diese Länge = a/2 nach links. Jetzt wird die Schubstange 32 um weitere 90° in derselben Richtung wie vorher gedreht, so daß jetzt nur der Zwischenhubnocken 51 gemäß Darstellung in Figur 2, Position II, in eine Verriegelungsnut 44 in Eingriff kommt, während die anderen Vorschubnocken 49 außer Eingriff bleiben. Diese Drehungen der Schubstange 32 sind durch den links gezeigten gebogenen Pfeil 52 veranschaulicht.

Wird die Schubstange 32 jetzt in Richtung des Pfeils 54 um den halben Takthub wieder zurück nach rechts geschoben, dann fördert der Zwischenhubnocken 51 den einzigen Packungsträger 2 um den halben Takthub a/2 nach rechts, so daß die Packungsträger 2 sich in der in Figur 2 gezeigten Position III befinden. Die schwarzen Punkte zeigen, welche Flaschenhälse 36 bereits versiegelt sind. Von rechts nach links gesehen kann jetzt der vierte Flaschenhals, weil er ebenfalls unter der strichpunktierten Linien und damit der Siegelstation 5 zu liegen kommt, versiegelt werden. Dies ist der Zustand der Position III in Figur 2.

Der Betrieb wiederholt sich in ähnlicher Weise, indem gemäß dem gebogenen Pfeil 55 die Schubstange 32 wieder um 90° so bewegt wird. daß alle Nocken von den Verriegelungsnuten 44 außer Eingriff sind. Die Schubstange 32 kann jetzt entgegen der ersten Laufrichtung 8 um eine volle Taktlänge nach links geschoben werden. so daß zwei Vorschubnocken 49 mit Verriegelungsnocken 44 in Eingriff stehen (in Figur 2 nicht gezeigt). Wird die Schubstange 32 jetzt um die volle Taktlänge a in Richtung des Pfeils 50 nach rechts geschoben, dann ist wieder der Zustand der Position I erreicht. Von da an wiederholt sich der Betriebsablauf.

### Bezugszeichenliste:

- 1: Packung, Flasche
- 2: Packungsträger
- 3: Rahmen
- 4,5,6: Bearbeitungsstationen
- 5: Siegelstation
- 6: Füllstation
- 7: erste Prozeßebene
- 8: erste Laufrichtung
- 9: zweiter Hebeförderer
- 10, 10': zweite Laufrichtung
- 11: dritte Ladeebene
- 12: dritter Förderer
- 13: zweite Rücklaufebene
- 14: dritte Laufrichtung
- 15: vierter Hebeförderer
- 16, 16': vierte Laufrichtung
- 17: oben liegendes Ende des zweiten Hebeförderers 9
- 18: unten liegendes Ende des zweiten Hebeförderers 9
- 19: erster Förderer
- 20: unten liegendes Ende des vierten Hebeförderers 15
- 21: oben liegendes Ende des vierten Hebeförderers 15
- 22: Motor, Antrieb
- 23, 24: Antriebswellen
- 25, 25': Laderichtung (Entladen)
- 26, 26': Laderichtung (Beladen)
- 27: Getriebe
- 28: Welle
- 29: Kurbelschwinge
- 30: Pleuelstange
- 31: Schlitten
- 32: Schubstange
- 33: Vorderseite des Packungsträgers
- 34: Hinterseite des Packungsträgers
- 35: Ausnehmung
- 36: Flaschenhals
- 37: Schlitten
- 38: Endlosriemen
- 39: Tasche
- 40: Träger
- 41: Stütze
- 42: Gegenschiene
- 43: Vorschubblock
- 44: Verriegelungsnut
- 45: Versteifungsträger
- 46: flache Auflageschiene
- 47: Tragschiene
- 48: Flachführung
- 49: Vorschubnocken
- 50: Pfeil in erster Laufrichtung
- 51: Zwischenhubnocken
- 52: Pfeil entgegen erster Laufrichtung
- 53: Pfeil für Drehung
- 54: Pfeil für erste Laufrichtung
- 55: Pfeil für Drehung

- I: Betriebszustand des ersten Förderers 19: Normalhub
- II: Betriebszustand des ersten Förderers 19: Beginn Zwischenhub
- III: Betriebszustand des ersten Förderers 19: Ende Zwischenhub

- a: Abstand der Vorschubnocken
- B: Breite der Ausnehmungen 35
- D: Außendurchmesser des Flaschenhalses

## Patentansprüche

1. Vorrichtung zum intermittierenden Fördern von Packungen (1), die in einer ersten Laufrichtung (8) in Packungsträgern (2) auf einer ersten Prozeßebene (7) in Positionen unterhalb von verschiedenen Bearbeitungsstationen (4, 5, 6) und auf einer zweiten Rücklaufebene (13) in einer zweiten, zu der ersten Laufrichtung (8) parallelen Laufrichtung (14) unter Bildung eines Förderkreislaufes zurück gefördert werden, **dadurch gekennzeichnet, daß**
- die jeweils übereinanderliegenden Enden (17, 18; 21, 20) des im wesentlichen horizontal verlaufenden ersten Förderers (19) in der ersten Prozeßebene (7) und des im wesentlichen horizontal verlaufenden dritten Förderers (12) in der zweiten Rücklaufebene (13) zur Bildung des Förderkreislaufes durch im wesentlichen vertikal arbeitende zweite und vierte Hebeförderer (9, 15) miteinander verbunden sind,
- daß jeder Förderer (19, 9, 12, 15) einen separaten Antrieb (22 - 24) hat,
- daß zwischen der ersten Prozeßebene (7) und der zweiten Rücklaufebene (13) eine dritte Ladeebene (11) angeordnet ist,
- die drei Ebenen (7, 11, 13) im wesentlichen horizontal angeordnet sind,
- jeder Packungsträger (2) einen im wesentlichen ebenen Aufbau hat, der über den Förderkreislauf in einer im wesentlichen horizontalen Stellung gehalten wird und
- daß im Bereich der dritten Ladeebene (11) Mittel zum Be- und Entladen der Packungen (1) in die und/oder aus den Packungsträgem (2) in einer Laderichtung (25, 25', 26,26') vorgesehen sind, die zu der ersten Laufrichtung (8) der Packungen (1) parallel ist.

2. Vorrichtung nach Anspruch 1, **dadurch gekennzeichnet, daß** die gesamte Förderzeit des Hebeförderers (9, 15) im wesentlichen gleich der Taktzeit des ersten Förderers (19) in der ersten Prozeßebene (7) ist und daß die Zeit zum Be- und Entladen etwa gleich der Transportzeit innerhalb der Taktzeit des ersten Förderers (19) ist.

3. Vorrichtung nach Anspruch 1 oder 2, **dadurch gekennzeichnet, daß** der Packungsträger (2) auf zwei diametral gegenüberliegenden Seiten (33, 34) U-förmige, nach außen offene Ausnehmungen (35) aufweist, die in der ersten Laufrichtung (8) des ersten Förderers (19) ausgerichtet sind.

4. Vorrichtung nach einem der Ansprüche 1 bis 3, **dadurch gekennzeichnet, daß** der Packungsträger (2) die Gestalt einer länglichen, sich quer zu der ersten Laufrichtung (8) erstreckenden Leiste derart hat, daß die Ausnehmungen (35) paarweise nebeneinander zu liegen kommen.

5. Vorrichtung nach einem der Ansprüche 1 bis 4, **dadurch gekennzeichnet, daß** der Packungsträger (2) für die Halterung von Flaschen (1) ein leistenförmiges Blech mit quer zu der ersten Laufrichtung (8) nebeneinander angeordneten Paaren von einander abgewandten U-förmigen Ausnehmungen (35) ist, deren Breite (B) dem Außendurchmesser (D) des Flaschenhalses (36) entspricht.

6. Vorrichtung nach einem der Ansprüche 1 bis 5, **dadurch gekennzeichnet, daß** die Antriebseinrichtung (22, 27 - 32) des ersten Förderers (19) in der ersten Prozeßebene (7) mindestens eine sich in der ersten Laufrichtung (8) erstreckende Schubstange (32) aufweist, die schwenkbar und in der ersten Laufrichtung (8) und entgegen dieser vor- und zurück verschiebbar ist und auf der im Abstand (a) voneinander Vorschubnocken (49) befestigt sind, die mit Verriegelungsnuten (44) am Packungsträger (2) in Eingriff bringbar sind.

7. Vorrichtung nach Anspruch 6, **dadurch gekennzeichnet, daß** zwischen zwei Vorschubnocken (49), die in gleicher Richtung von der Schubstange (32) radial abstehen, ein Zwischenhubnocken (51) in einer anderen Richtung radial abstehend auf der Schubstange (32) derart befestigt ist, daß jeder Packungsträger (2) in halber Taktzeit um den halben Taktweg (a/2) unter einer bestimmten Bearbeitungsstation (5) vorbewegbar ist.

## Claims

1. Apparatus for intermittently conveying packages (1) which are conveyed in a first travel direction (8) in package carriers (2) on a first process plane (7) in positions beneath various treatment stations (4, 5, 6) and back on a second return plane (13) in a second travel direction (14) parallel to the first travel direction (8), forming a conveyor circuit, **characterized in that**
- the respective mutually superposed ends (17, 18; 21, 20) of the substantially horizontally extending first conveyor (19) in the first process plane (7) and the substantially horizontally extending third conveyor (12) in the second return plane (13) are interconnected by substantially vertically operating second and fourth lift conveyors (9, 15), to form the conveyor circuit,
- each conveyor (19, 9, 12, 15) has a separate drive (22 - 24),
- a third loading plane (11) is arranged between the first process plane (7) and the second return plane (13),
- the three planes (7, 11, 13) are arranged substantially horizontally,
- each package carrier (2) is of a substantially flat structure which is held in a substantially horizontal position over the conveyor circuit, and
- provided in the region of the third loading plane (11) are means for loading and unloading the packages (1) into and/or out of the package carriers (2) in a loading direction (25, 25', 26, 26') which is parallel to the first travel direction (8) of the packages (1).

2. Apparatus as set forth in claim 1 **characterized in that** the total conveyor time of the lift conveyor (9, 15) is substantially equal to the cycle time of the first conveyor (19) in the first process plane (7) and that the time for loading and unloading is approximately equal to the transport time within the cycle time of the first conveyor (19).

3. Apparatus as set forth in claim 1 or claim 2 **characterized in that** the package carrier (2) on two diametrally opposite sides (33, 34) has U-shaped, outwardly open recesses (35) which are oriented in the first travel direction (8) of the first conveyor (19).

4. Apparatus as set forth in one of claims 1 through 3 **characterized in that** the package carrier (2) is in the configuration of an elongate bar extending transversely with respect to the first travel direction (8), in such a way that the recesses (35) come to lie in paired mutually juxtaposed relationship.

5. Apparatus as set forth in one of claims 1 through 4 **characterized in that** the package carrier (2) for holding bottles (1) is a bar-shaped sheet member with pairs, which are arranged in mutually juxtaposed relationship transversely with respect to the first travel direction (8), of U-shaped recesses (35) which face away from each other and the width (B) of which corresponds to the outside diameter (D) of the bottle neck (36).

6. Apparatus as set forth in one of claims 1 through 5 **characterized in that** the drive device (22, 27 - 32) of the first conveyor (19) in the first process plane (7) has at least one thrust rod (32) which extends in the first travel direction (8) and which is pivotable and which is displaceable forwardly and back in the first travel direction (8) and in opposite relationship thereto and on which are fixed at a spacing (a) from each other advance projections (49) which can be brought into engagement with locking grooves (44) on the package carrier (2).

7. Apparatus as set forth in claim 6 **characterized in that** between two advance projections (49) which project radially in the same direction from the thrust rod (32) an intermediate stroke projection (51) is fixed on the thrust rod (32) projecting radially in a different direction, in such a way that each package carrier (2) can be advanced in half the cycle time by half the cycle distance (a/2) under a given treatment station (5).

## Revendications

1. Dispositif de transport discontinu d'emballages (1) qui sont transportés dans un premier sens de déplacement (8) dans des porte-emballages (2) dans un premier plan de processus (7) à des positions au-dessous de différents postes de traitement (4, 5, 6) et dans un deuxième plan de retour (13) dans un deuxième sens de déplacement (14) parallèle au premier sens de déplacement (8) de façon à former un circuit fermé de transport, **caractérisé en ce que**
- les extrémités superposées (17, 18 ; 21, 20) du premier transporteur (19) s'étendant sensiblement horizontalement dans le premier plan de processus (7) et le troisième transporteur (12) s'étendant sensiblement horizontalement dans le deuxième plan de retour (13) sont reliés par des deuxième et quatrième transporteurs élévateurs (9, 15) fonctionnant sensiblement verticalement en vue de former le circuit fermé de transport,
- chaque transporteur (19, 9, 12, 15) possède un entraînement séparé (22 à 24),
- un troisième plan de chargement (11) est agencé entre le premier plan de processus (7) et le deuxième plan de retour (13),
- les trois plans (7, 11, 13) sont agencés sensiblement horizontalement,
- chaque porte-emballage (2) a une structure sensiblement plane qui est maintenue au-dessus du circuit fermé de transport dans une position sensiblement horizontale, et
- Il est prévu au niveau du troisième plan de chargement (11) des moyens de chargement des emballages (1) dans les porte-emballages (2) et de déchargement des emballages (4) hors des porte-emballages (2) dans une direction de chargement (25, 25', 26, 26') qui est parallèle au premier sens de déplacement (8).

2. Dispositif selon la revendication 1, **caractérisé en ce que** le temps de transport total du transporteur élévateur (9, 16) est sensiblement égal à la durée du cycle du premier transporteur (19) dans le premier plan de processus (7) et **en ce que** le temps de chargement et de déchargement est à peu près égal au temps de transport pendant la durée de cycle du premier transporteur (19).

3. Dispositif selon la revendication 1 ou 2, **caractérisé en ce que** le porte-emballage (2) comporte sur des côtés diamétralement opposés (33, 34) des évidements (35) on forme de U, ouverts vers l'extérieur, qui sont orientés dans le premier sens de transport (8) du premier transporteur (19).

4. Dispositif selon l'une des revendications 1 à 3, **caractérisé en ce que** le porte-emballage (2) a la forme d'une barre conductrice allongée s'étendant transversalement au premier sens de transport (8) de sorte que les évidements (35) se trouvent placés par paire les uns à côté des autres.

5. Dispositif selon l'une des revendications 1 à 4, **caractérisé en ce que** le porte-emballage (2) destiné à supporter des bouteilles (1) est une tôle en forme de barre conductrice comportant des paires d'évidements (35) disposées les unes à côté des autres transversalement au premier sens de transport (8), les évidements en forme de U étant disposés à distance les uns des autres et ayant une largeur (B) qui correspond au diamètre extérieur (D) du col (36) des bouteilles.

6. Dispositif selon l'une des revendications 1 à 5, **caractérisé en ce que** le dispositif d'entraînement (22, 27 à 32) du premier transporteur (19) comporte dans le premier plan de processus (7) au moins une bielle (32) qui s'étend dans la première direction de transport (8), qui est apte à pivoter et à se déplacer d'avant en arrière dans le premier sens de déplacement et dans le sens opposé, et sur laquelle sont fixés des taquets d'avancement (49) placés à distance les uns des autres et qui peuvent être amenés en engagement avec des gorges de verrouillage (44) ménagées dans le porte-emballage (2).

7. Dispositif selon la revendication 6, **caractérisé en ce que**, entre deux taquets d'avancement (49) qui sont distants radialement de la bielle dans une même direction, un taquet de levage intermédiaire (51) est fixé sur la bielle (132) radialement à distance dans une autre direction de sorte que chaque porte-emballage (2) peut avancer dans la moitié d'une durée de cycle de la moitié du trajet de cycle (a/2) au-dessous d'un poste de traitement déterminé (5).
